# EUROPÄISCHE PATENTSCHRIFT

(11) **EP 4 367 548 B1**
(45) Veröffentlichungstag und Bekanntmachung des Hinweises auf die Patenterteilung: **07.10.2026**
(21) Anmeldenummer: 22737899.9
(22) Anmeldetag: 04.07.2022
(51) Int. Cl.: G02B 27/09, G01M 11/02, G01B 11/25, G01B 11/255

(54) **OPTISCHE MESSBELEUCHTUNGSVORRICHTUNG ZUM BELEUCHTEN EINES OPTISCHEN PRÜFLINGS UND VERFAHREN ZUM BETREIBEN EINER OPTISCHEN MESSBELEUCHTUNGSVORRICHTUNG**
OPTICAL ILLUMINATION-BASED MEASURING SYSTEM FOR ILLUMINATING AN OPTICAL TEST OBJECT, AND METHOD FOR OPERATING AN OPTICAL ILLUMINATION-BASED MEASURING SYSTEM
SYSTÈME DE MESURE OPTIQUE BASÉ SUR UN ÉCLAIRAGE POUR ÉCLAIRER UN OBJET DE TEST OPTIQUE, ET PROCÉDÉ DE FONCTIONNEMENT D'UN SYSTÈME DE MESURE OPTIQUE BASÉ SUR UN ÉCLAIRAGE

(30) Priorität: 06.07.2021 DE 102021117422
(43) Veröffentlichungstag der Anmeldung: 15.05.2024
(73) Patentinhaber: Trioptics GmbH, 22880 Wedel (DE)
(72) Erfinder: RUPRECHT, Aiko, 22880 Wedel (DE)
(74) Vertreter: Waldauf, Alexander
(86) Internationale Anmeldenummer: PCT/EP2022/068378
(87) Internationale Veröffentlichungsnummer: WO 2023/280744

(56) Entgegenhaltungen:
- GB-A- 2 256 338
- US-A1- 2005 157 311
- US-A1- 2019 250 037
- US-A1- 2020 150 446

## Beschreibung

Der vorliegende Ansatz bezieht sich auf eine optische Messbeleuchtungsvorrichtung zum Beleuchten eines optischen Prüflings und Verfahren zum Betreiben einer optischen Messbeleuchtungsvorrichtung.

Der Grad der Zentrierung von optischen Flächen zur optischen Achse eines optischen Systems ist ein wichtiges Gütekriterium für optische Systeme. Die Messung der Zentrierung kann für sphärische oder nahezu sphärische Flächen durch verschiedene Ansätze vorgenommen werden. Speziell die Nutzung eines Autokollimators mit Vorsatzoptik bei Rotation des Prüflings stellt ein verwendetes Verfahren dar. Dabei wird durch die Vorsatzoptik in den Krümmungsmittelpunkt der zu messenden, sphärischen Fläche fokussiert.

Das Dokument US 2005/157311 A1 offenbart ein Scan-Interferometer für asphärische Oberflächen und Wellenfronten.

Das Dokument US 2020/150446 A1 offenbart ein Verfahren und ein System zur Verbesserung einer lateralen Auflösung in optischen Scan-Mikroskopen.

Das Dokument GB 2 256 338 A offenbart eine Ausrichtungseinheit.

Das Dokument US 2019/250037 A1 offenbart ein hoch-auflösendes Modul zur Konzentration von Tera-Hertz-Wellen, ein Modul zur Erfassung von Streulicht und eine hochauflösende Prüfvorrichtung mit einem Tera-Hertz-Besselstrahl.

### Offenbarung der Erfindung

Vor diesem Hintergrund wird mit dem vorliegenden Ansatz eine verbesserte optische Messbeleuchtungsvorrichtung zum Beleuchten eines optischen Prüflings und ein verbessertes Verfahren zum Betreiben einer optischen Messbeleuchtungsvorrichtung gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen in einer Messbarkeit einer Zentrierung sowie der Möglichkeit einer Tiltmessung von starken Asphären. Zudem ist eine Multilens-Messung für asphärische Miniaturobjektive möglich.

Es wird eine optische Messbeleuchtungsvorrichtung zum Beleuchten eines mit einer rotationssymmetrischen, asphärischen Oberfläche ausgeformten und in einer Messebene angeordneten optischen Prüflings vorgestellt, wobei die Messbeleuchtungsvorrichtung eine Beleuchtungseinrichtung zum Bereitstellen von zumindest einem Lichtstrahl aufweist. Zudem umfasst die Messbeleuchtungsvorrichtung eine Strahlformungseinrichtung zum Umformen des zumindest einen Lichtstrahls zu einem Bessel-Lichtstrahl, wobei eine Form des Bessel-Lichtstrahls innerhalb eines Toleranzbereichs durch die Bessel-Funktion beschreibbar ist, und ein Optikelement zum Überführen des Bessel-Lichtstrahls in einen des optischen Prüflings und zusätzlich oder alternativ einer Erfassungsebene ringförmig fokussiert oder fokussierbar ist.

Bei dem Prüfling kann es sich beispielsweise um eine stark asphärische, dabei jedoch rotationssymmetrische, Fläche von beispielsweise 1 bis 3 mm handeln, wie zum Beispiel eine Schmidt-Platte. In diesem Fall liegt kein einzelner Krümmungsmittelpunkt des Prüflings vor, sondern jedem Radialabstand (Zone) kann über die lokale Oberflächensteigung ein individueller Krümmungsmittelpunkt zugeordnet werden, der beispielsweise auf der Symmetrieachse (optischen Achse) der Linse liegen kann. Dieser kann sich konstruktiv durch den Schnittpunkt der lokalen Flächennormalen mit der Symmetrieachse der Linse ergeben. Dabei können die Flächennormalen der jeweiligen Zone unterschiedliche Winkel zur optischen Achse (Symmetrieachse) der zu prüfenden Linse aufweisen. Eine Darstellung dieses Zusammenhangs findet man beispielsweise in Optical Engineering, 57(10), 101708 (2018). https://doi.org/10.1117/1.OE.57.10.101708. Eine Erkenntnis der Erfindung ist, dass die Form von Asphären alternativ auch so interpretiert werden, dass Krümmungsmittelpunkte, die einer Zone der Linse zugeordnet werden können, entsprechend der lokalen Krümmung bestimmt werden können, wodurch die Krümmungsmittelpunkte einer Zone auf einem Ring liegen können, dessen Mittelpunkt auf der Symmetrieachse liegen kann und dass ein Retroreflex erzeugt werden kann, wenn ein ringförmiger Fokus sich mit diesem Ring überlagert. Da die Krümmungsradien sich stark abhängig vom betrachteten Radialabstand ändern können, ist eine schmale, zonale Beleuchtung im Radialabstand vorteilhaft, um einen guten Retroreflex zu erhalten. Beispielsweise kann ein Ringfokuslichtstrahl beziehungsweise ein ringförmiger Fokus dadurch entstehen, dass durch das optische Element, das auch als Fokussieroptik bezeichnet werden kann, eine ringförmige Struktur mit geringer Linienbreite abgebildet werden kann.

Mit der hier vorgestellten Messbeleuchtungsvorrichtung wird dabei ein Bessel-Lichtstrahl beziehungsweise ein Bessel-ähnlicher Strahl vor der Fokussieroptik genutzt. Der Bessel-Lichtstrahl kann dabei in einer Form, beispielsweise im Querschnitt, innerhalb eines Toleranzbereichs von zum Beispiel 10% durch die Bessel-Funktion beschreibbar sein. Mit anderen Worten kann der Bessel-Lichtstrahl bezüglich einer räumlichen Ausdehnung und zusätzlich oder alternativ einer Intensitätsausdehnung einen Parameter eines Bessel-Strahls aufweisen. Bessel-Strahlen ergeben sich, ähnlich wie Gauß-Strahlen, als eine mögliche Lösung der Helmholtz-Differentialgleichung. Bei Bessel-Strahlen kann die radiale Verteilung der elektrischen Feldstärke mithilfe der Besselfunktion, mathematisch in guter Näherung, beschrieben werden. Die Intensität ist, analog zu Gauß-Strahlen, proportional zum Quadrat der Feldstärke. Eine wichtige Eigenschaft von Bessel-Strahlen besteht darin, dass ein Fokus-ähnliches Intensitätsmaximum auf der optischen Achse entsteht, der sogenannte Bessel-Fokus, und dessen Intensität in Propagationsrichtung nicht abnimmt. Das heißt, dass der Strahl im theoretischen Optimalfall eine unendliche Schärfentiefe aufweist. In der Praxis ist es aus physikalischen Gründen unmöglich einen idealen Bessel-Strahl zu erzeugen, da dies eine unendliche Energiemenge erfordern würde. Es lassen sich jedoch mithilfe geeigneter optischer Systeme Bessel-ähnliche Strahlen erzeugen. Im realen Fall kann ein solcher Bessel-ähnlicher Strahl eine endliche, maximale Schärfentiefe *zₘₐₓ* aufweisen. Im Rahmen der hier vorgestellten optischen Messbeleuchtungsvorrichtung wird in diesem Zusammenhang die Tatsache ausgenutzt, dass eine mit einem Bessel-Strahl beleuchtete Linse einen ringförmigen Fokus erzeugt. Der Hintergrund hierfür ist, dass der Bessel-Strahl und der Ringfokus mathematisch über die Fouriertransformation verknüpft sind.

Gemäß einer Ausführungsform kann die Strahlformungseinrichtung ein Axicon umfassen. Bei dem Axicon kann es sich um eine konische Linse handeln, die beispielsweise konvex oder konkav sein kann, welche ein ringförmiges Strahlprofil erzeugen kann. Bei der Verwendung eines Axicons zur Erzeugung des Bessel-Lichtstrahls und des ringförmigen Zwischenbildes können diverse Ansätze zur Strahlformung angewendet werden. Beispielsweise kann eine nicht vollständig kollimierte Beleuchtung des Axicons zur Änderung des Ringdurchmessers (Beleuchtete Zone) oder des Durchmessers des Ringfokus eingesetzt werden. Denkbar wäre auch der Einsatz von zwei weiteren Axicons als Zoom-Optik. Dabei kann die Strahlbegrenzung beispielsweise mithilfe einer ringförmigen Aperturblende beispielsweise vor dem Axicon realisiert werden. Vorteilhafterweise können Axicons aus verschiedenen optischen Materialien hergestellt werden, wodurch sie kostengünstig und an spezielle Anforderungen einer optischen Messbeleuchtungsvorrichtung anpassbar hergestellt werden können.

Gemäß einer weiteren Ausführungsform kann die Strahlformungseinrichtung eine Strichplatte und ein konvexes Linsenelement umfassen. Dabei kann die Strichplatte, die auch als Reticle bezeichnet werden kann, innerhalb eines Toleranzbereichs in einer Brennebene des Linsenelements angeordnet sein und zusätzlich oder alternativ senkrecht zu einer optischen Achse des Linsenelements angeordnet sein, insbesondere wobei die Strichplatte austauschbar und zusätzlich oder alternativ veränderbar sein kann. Beispielsweise kann zur Generierung des Bessel-Lichtstrahls eine ringförmige Struktur, auf einer Strichplatte, als Objekt abgebildet werden. Dabei können zum Beispiel sowohl der Durchmesser des Ringfokus als auch die zugehörigen Winkel der Hauptstrahlen einstellbar sein, um vorteilhafterweise die Messvorrichtung an verschiedene Prüflinge anzupassen. Vorteilhafterweise kann eine Strichplatte einfach und kostengünstig hergestellt werden.

Gemäß einer weiteren Ausführungsform kann die Strahlformungseinrichtung ausgebildet sein, um den Bessel-Lichtstrahl in Form einer Mehrzahl von im Wesentlichen konzentrischen Ringen bereitzustellen. Beispielsweise kann der Bessel-Lichtstrahl in einem Querschnitt mehrere konzentrische Ringe aufweisen, deren Intensitätsverteilung beispielsweise vom Zentrum zu den äußeren Ringen hin abnehmen kann.

Gemäß einer weiteren Ausführungsform kann die Beleuchtungseinrichtung eine (zumindest teilweise) ringförmig ausgeformte Aperturblende umfassen, insbesondere wobei die Aperturblende austauschbar und zusätzlich oder alternativ veränderbar sein kann. Beispielsweise kann das Strahlformungselement eine Strichplatte sowie eine ringförmige Aperturblende beinhalten. Zusätzlich oder alternativ kann die Strahlbegrenzung mithilfe einer ringförmigen Aperturblende beispielsweise vor einem Axicon realisiert werden. Dabei kann die Beleuchtung zum Beispiel divergent erfolgen und es kann beispielsweise eine zusätzliche, (zumindest teilweise) ringförmige Aperturblende zur Strahlbegrenzung im Strahlengang angeordnet sein. Die Aperturblende kann austauschbar sein. Vorteilhafterweise kann eine Aperturblende die Helligkeit eines Strahlengangs gleichmäßig beeinflussen, indem sie die Öffnungsweite der optischen Vorrichtung begrenzt.

Gemäß einer weiteren Ausführungsform kann die Beleuchtungseinrichtung eine kohärente Lichtquelle umfassen und zusätzlich oder alternativ ausgebildet sein, um den Lichtstrahl kollimiert bereitzustellen, und zusätzlich oder alternativ zumindest ein Display aufweisen. Die Beleuchtungseinrichtung kann zum Beispiel aus einer näherungsweise kohärenten sowie schmalbandigen Lichtquelle bestehen, beispielsweise in Kombination mit einer Kollimationsoptik, wie zum Beispiel einer konvexen Linse oder einem Objektiv. Zusätzlich oder alternativ kann die Beleuchtungseinrichtung, die auch als Beleuchtungseinheit bezeichnet werden kann, ein Display umfassen, welches zum Beispiel ausgebildet sein kann, um Strukturen mit einstellbarem Kontrastverhältnis darzustellen. Vorteilhafterweise könnten somit verschiedene Ringstrukturen über das Display erzeugt werden. Zudem könnte bei kollimierter Beleuchtung des Reticles, beispielsweise durch eine Kondensorlinse, die Änderung der Winkel der konisch kollimierten Strahlenbündel durch eine Änderung des Blendendurchmessers ermöglicht werden.

Gemäß einer weiteren Ausführungsform kann die optische Messbeleuchtungsvorrichtung eine Detektionseinrichtung zum Erfassen eines von dem Prüfling reflektierten Strahls aufweisen, wobei die Detektionseinrichtung ausgebildet sein kann, um ein den reflektierten Strahl repräsentierendes Signal bereitzustellen. Beispielsweise kann die Detektionseinrichtung, die auch als Detektionselement oder Detektor bezeichnet werden kann, in der Erfassungsebene der Messbeleuchtungsvorrichtung angeordnet sein, wobei zum Beispiel ein von der asphärischen Fläche des Prüflings reflektiertes Strahlenbündel auf der Detektionseinrichtung gebündelt werden kann. Vorteilhafterweise kann mittels der Detektionseinrichtung eine Anordnung des Prüflings in Relation zu der Messbeleuchtungsvorrichtung erfasst werden.

Gemäß einer weiteren Ausführungsform kann die Detektionseinrichtung mindestens einen Bildsensor umfassen, wobei der reflektierte Strahl auf dem Bildsensor abbildbar sein kann. Beispielsweise kann die Detektionseinrichtung einen Bildsensor aufweisen, der zum Beispiel als ein CCD oder CMOS Sensor ausgebildet sein kann, wobei die Ebene des ringförmigen Fokus auf dem Bildsensor abgebildet (optisch konjugiert) werden kann. Dabei kann zum Beispiel die Ebene der Bessel-artigen Intensitätsverteilung auf dem Bildsensor abgebildet werden. Vorteilhafterweise kann ein solcher Bildsensor platzsparend und kostengünstig hergestellt werden.

Gemäß einer weiteren Ausführungsform kann die optische Messbeleuchtungsvorrichtung einen Strahlteiler umfassen, der ausgebildet sein kann, um den Bessel-Lichtstrahl passieren zu lassen und den reflektierten Strahl abzulenken. Bei dem Strahlteiler kann es sich zum Beispiel um einen dichroitischen Spiegel, handeln. Die Position des Strahlteilers kann innerhalb des optischen Systems beispielsweise bezüglich einer Detektionseinrichtung so gewählt werden, dass entweder der Ringfokus oder der Bessel-Lichtstrahl auf der Detektionseinrichtung abgebildet werden können. Es können zum Beispiel auch zwei Strahlteiler verwendet werden, sodass beide Ebenen sichtbar gemacht werden können. Vorteilhafterweise kann mittels des Strahlteilers das vom Prüfling reflektierte Licht durch die Detektionseinrichtung erfasst werden.

Gemäß einer weiteren Ausführungsform kann die optische Messbeleuchtungsvorrichtung eine Auswerteeinheit aufweisen, die ausgebildet sein kann, um unter Verwendung des Signals eine Position des Prüflings in Relation zu der optischen Messvorrichtung zu berechnen. Beispielsweise kann die Auswerteeinheit ausgebildet sein, um eine aus einer Intensitätsverteilung auf dem Detektor erfasste Kenngröße zu berechnen, die zum Beispiel mit der lateralen Lage des Prüflings relativ zum Messsystem korrelieren kann.

Gemäß der Erfindung wird der Prüfling relativ zum Messsystem rotiert oder eine optisch äquivalente Rotationsbewegung erzeugt, somit kann vorteilhafterweise aus den ermittelten Messdaten auf die Zentrierung des Prüflings relativ zur Rotationsachse geschlossen werden. Werden zum Beispiel Messungen auf unterschiedlichen Zonen des asphärischen Prüflings durchgeführt, kann beispielsweise durch eine Kombination der Messdaten sowohl auf die Zentrierung als auch auf die Richtung der Asphärenachse (Verkippung) zurückgeschlossen werden. Entsprechend können vorteilhafterweise mehrere Messungen auf unterschiedlichen Zonen des asphärischen Prüflings durchgeführt werden und mittels der Auswerteeinheit Kenngrößen sowohl für die laterale Lage des Prüflings als auch die Richtung der Asphärenachse ermittelt werden.

Zudem wird ein Verfahren zum Betreiben einer Variante der zuvor vorgestellten Messbeleuchtungsvorrichtung vorgestellt, wobei das Verfahren einen Schritt des Bereitstellens von zumindest einem Lichtstrahl umfasst. Zudem umfasst das Verfahren einen Schritt des Umformens des, zumindest einen, Lichtstrahls zu einem Bessel-Lichtstrahl, wobei eine Form des Bessel-Lichtstrahls innerhalb eines Toleranzbereichs durch die Bessel-Funktion beschreibbar ist, und einen Schritt des Überführens des Bessel-Lichtstrahls in einen Ringfokuslichtstrahl, der in der Messebene des optischen Prüflings und optional zusätzlich einer Erfassungsebene ringförmig fokussiert oder fokussierbar ist. Gemäß einer Ausführungsform kann das Verfahren einen Schritt des Erfassens eines von dem Prüfling reflektierten Strahls und Bereitstellen eines den reflektierten Strahl repräsentierenden Signals aufweisen. Vorteilhafterweise kann dadurch eine Position des Prüflings innerhalb eines optischen Systems erfasst und in Form eines Signals beispielsweise an eine Auswerteeinheit bereitgestellt werden.

Gemäß einer weiteren Ausführungsform kann das Verfahren einen Schritt des Berechnens einer Position zumindest eines Krümmungsmittelpunks einer Sphärenzone des Prüflings aufweisen. Dabei kann die Position in Relation zu der optischen Messbeleuchtungsvorrichtung unter Verwendung des Signals erfolgen. Beispielsweise kann jedem Radialabstand, beziehungsweise jeder Zone, des Prüflings ein individueller Krümmungsmittelpunkt zugeordnet werden. Dabei kann die Form von Asphären so interpretiert werden, dass Krümmungsmittelpunkte, die einer Zone der Linse, das heißt des Prüflings, zugeordnet werden können, entsprechend der lokalen Krümmung bestimmt werden können, wodurch die Krümmungsmittelpunkte einer Zone auf einem Ring liegen, dessen Mittelpunkt auf der Symmetrieachse liegt. Vorteilhafterweise kann dadurch der Ansatz des Fokussierens auf einen Krümmungsmittelpunkt einer sphärischen Fläche auf neuartige Weise so erweitert werden, dass er sich auf rotationssymmetrische Asphären anwenden lässt.

Gemäß der Erfindung weist das Verfahren einen Schritt des Rotierens des Prüflings, um die Schritte des Verfahrens nach dem Rotieren erneut auszuführen, wobei im Schritt des Rotierens der Prüfling um eine Rotationsachse des Prüflings rotiert wird, die innerhalb eines Toleranzbereichs der optischen Achse der Messbeleuchtungsvorrichtung entspricht. Wird zum Beispiel der Prüfling relativ zum Messsystem rotiert oder eine optisch äquivalente Rotationsbewegung erzeugt, kann vorteilhafterweise aus den ermittelten Messdaten auf die Zentrierung des Prüflings relativ zur Rotationsachse geschlossen werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung, kann die der Erfindung zugrunde liegende Aufgabe schnell und effizient gelöst werden.

Hierzu kann die Vorrichtung zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Daten- oder Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EEPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung eines Querschnitts eines Prüflings gemäß einem Ausführungsbeispiel;
Fig. 2 eine schematische Darstellung eines Querschnitts eines Prüflings gemäß einem Ausführungsbeispiel;
Fig. 3 eine schematische Darstellung eines Ausführungsbeispiels einer Strahlformungseinrichtung zum Erzeugen eines Bessel-Lichtstrahls;
Fig. 4 eine schematische Darstellung eines Ausführungsbeispiels einer Strahlformungseinrichtung zum Erzeugen eines Bessel-Lichtstrahls;
Fig. 5 eine schematische Darstellung einer Messbeleuchtungsvorrichtung gemäß einem Ausführungsbeispiel;
Fig. 6 eine schematische Darstellung einer Messbeleuchtungsvorrichtung gemäß einem Ausführungsbeispiel;
Fig. 7 eine schematische Darstellung des Zusammenhangs zwischen dem Hauptstrahlwinkel des Bessel-Lichtstrahls und des Durchmessers des Ringfokus;
Fig. 8 eine schematische Darstellung einer Messbeleuchtungsvorrichtung gemäß einem Ausführungsbeispiel;
Fig. 9 eine schematische Darstellung einer Messbeleuchtungsvorrichtung gemäß einem Ausführungsbeispiel;
Fig. 10 eine schematische Darstellung einer Messbeleuchtungsvorrichtung gemäß einem Ausführungsbeispiel; und
Fig. 11 ein Ablaufdiagramm eines Verfahrens zum Betreiben einer Messbeleuchtungsvorrichtung gemäß einem Ausführungsbeispiel.

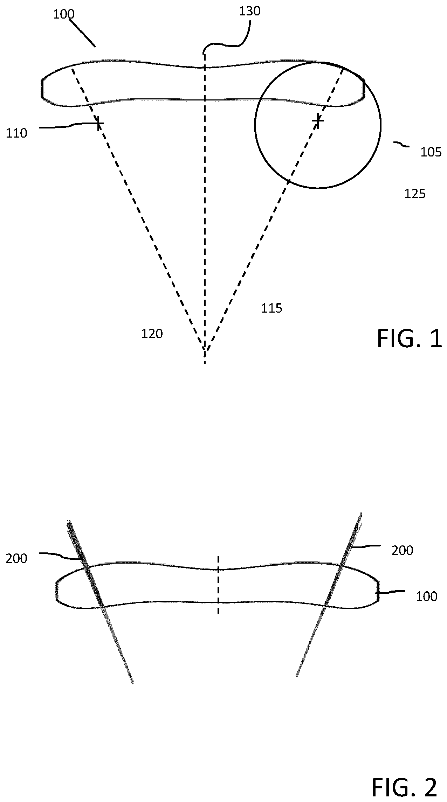

Fig. 1 zeigt eine schematische Darstellung eines Querschnitts eines Prüflings 100 gemäß einem Ausführungsbeispiel. Lediglich beispielhaft handelt es sich bei dem hier dargestellten Prüfling um eine stark asphärische, rotationssymmetrische Linse. In der hier gezeigten Abbildung ist die Lage der Krümmungsmittelpunkte 105, 110 der asphärischen Linse schematisch dargestellt, wobei die gestrichelten Linien 115, 120, die lokalen Flächennormalen entsprechen, die Mittelpunktskonstruktion anhand der lokalen Oberflächensteigung veranschaulichen. Der durchgezogene Kreis 125 skizziert den lokalen Krümmungsradius des Prüflings 100 und damit die Mittelpunktsbestimmung anhand der lokalen Krümmung. Nach letzterem Vorgehen existiert somit für jede Zone des Prüflings 100 in bestimmten Abstand von der Symmetrieachse 130 ein Kreis, auf welchem die jeweiligen, lokalen Krümmungsmittelpunkte 105, 110 angeordnet sind.

Fig. 2 zeigt eine schematische Darstellung eines Querschnitts eines Prüflings 100 gemäß einem Ausführungsbeispiel. Der hier dargestellte Prüfling 100 entspricht oder ähnelt dem in der vorangegangenen Figur beschriebenen Prüfling. In der hier gezeigten Darstellung treffen Beleuchtungsstrahlen 200 auf den Prüfling 100, bei denen es sich lediglich beispielhaft um Strahlen einer Lichtquelle handelt. Der Prüfling 100 ist ausgeformt, um mittels der einfallenden Beleuchtungsstrahlen 200 Retroreflex zu erzeugen, bei dem die Beleuchtungsstrahlen in einem Winkel von annähernd 0° Grad in die Einfallsrichtung reflektierbar sind.

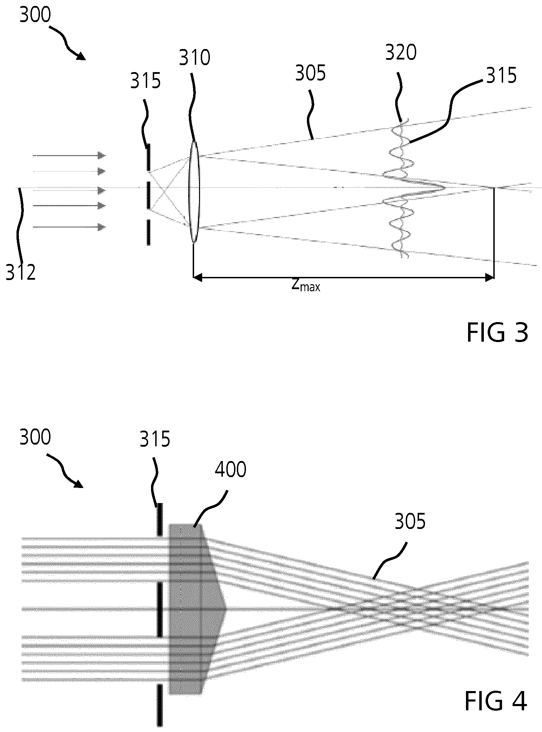

Fig. 3 zeigt eine schematische Darstellung eines Ausführungsbeispiels einer Strahlformungseinrichtung 300 zum Erzeugen eines Bessel-Lichtstrahls 305. In diesem Ausführungsbeispiel erfolgt die Generierung eines Bessel-Lichtstrahls 305 mittels einer Kombination aus einer Konvexlinse 310 und einer Ringblende 315, mit f als Brennweite der Linse und *zₘₐₓ* als maximale Propagationslänge des Bessel-Lichtstrahls 305. In diesem Ausführungsbeispiel entspricht der Bessel-Lichtstrahl einem Bessel-ähnlichen Strahl, wobei die radiale Verteilung der elektrischen Feldstärke mithilfe der Besselfunktion, mathematisch in guter Näherung, beschreibbar ist. Die Intensität ist proportional zum Quadrat der Feldstärke. Dabei weist der hier dargestellte Bessel-Lichtstrahl 305 ein fokusähnliches Intensitätsmaximum auf der optischen Achse 312 auf (Bessel-Fokus). In der hier gezeigten Darstellung deutet die Kurve 315 die radiale Feldverteilung des Bessel-Lichtstrahls 305 an und die weitere Kurve 320 die radiale Intensitätsverteilung.

Fig. 4 zeigt eine schematische Darstellung eines Ausführungsbeispiels einer Strahlformungseinrichtung 300 zum Erzeugen eines Bessel-Lichtstrahls 305. Die hier dargestellte Strahlformungseinrichtung entspricht oder ähnelt der in der vorangegangenen Figur 3 beschriebenen Strahlformungseinrichtung, mit dem Unterschied, dass die Generierung eines Bessel-Lichtstrahls 305 in diesem Ausführungsbeispiels mittels eines Axicon 400 erfolgt. Die Ringblende 315 dient zur Strahlbegrenzung. Die Teilstrahlen des Bessel-Lichtstrahls 305 sind lediglich beispielhaft innerhalb der konvergent verlaufenden Strahlenbündel hinter dem Axicon 400 näherungsweise zueinander kollimiert.

In einem anderen Ausführungsbeispiel kann die Strahlformungseinrichtung auch eine Strichplatte (Reticle) sowie eine ringförmige Aperturblende umfassen. In einem weiteren Ausführungsbeispiel kann die Strahlformungseinrichtung auch ausgebildet sein, um den Bessel-Lichtstrahl unter Verwendung von Hologrammen oder SLMs zu erzeugen.

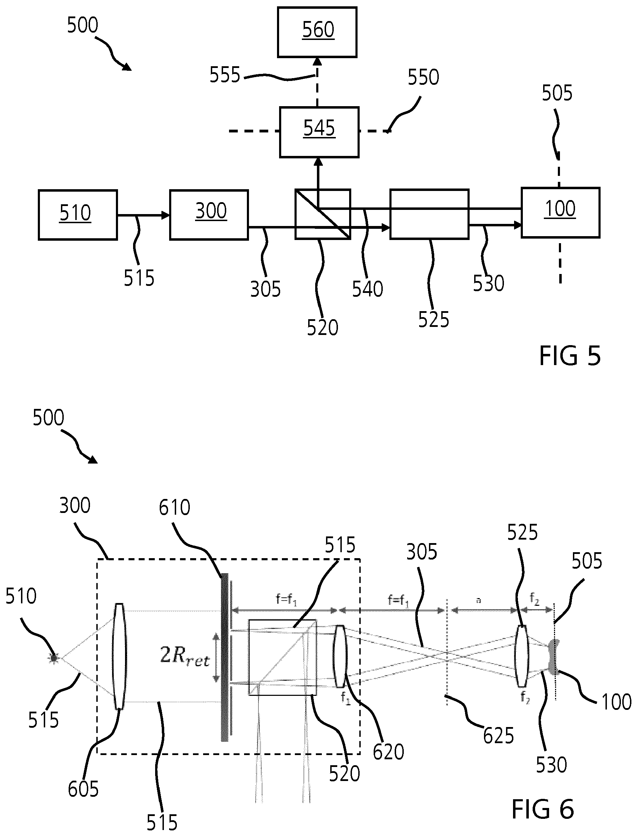

Fig. 5 zeigt eine schematische Darstellung einer Messbeleuchtungsvorrichtung 500 gemäß einem Ausführungsbeispiel. Die optische Messbeleuchtungsvorrichtung 500 ist ausgebildet, um einen mit einer rotationssymmetrischen, asphärischen Oberfläche ausgeformten und in einer Messebene 505 angeordneten optischen Prüfling 100 zu beleuchten. Lediglich beispielhaft ist der Prüfling 100 als Schmidt-Platte ausgebildet. Die Messbeleuchtungsvorrichtung 500 umfasst eine Beleuchtungseinrichtung 510, die auch als Beleuchtungseinheit bezeichnet werden kann, zum Bereitstellen eines Lichtstrahls 515. Der Lichtstrahl 515 ist mittels der Strahlformungseinrichtung 300 zu einem Bessel-Lichtstrahl 305 umformbar, wobei eine Form des Bessel-Lichtstrahls 305 innerhalb eines Toleranzbereichs von lediglich beispielhaft 10% durch die Bessel-Funktion beschreibbar ist. Dabei ist die Strahlformungseinrichtung 300 lediglich beispielhaft ausgebildet, um den Bessel-Lichtstrahl 305 in Form einer Mehrzahl von im Wesentlichen konzentrischen Ringen bereitzustellen. In diesem Ausführungsbeispiel weist die Messbeleuchtungsvorrichtung 500 zudem einen Strahlteiler 520 auf, der lediglich beispielhaft als dichroitischer Spiegel ausgeformt ist und der ausgebildet ist, um den Bessel-Lichtstrahl 305 passieren zu lassen. Der durch den Strahlteiler 520 passierte Bessel-Lichtstrahl 305 ist durch ein Optikelement 525 in einen Ringfokuslichtstrahl 530 überführbar, wobei das Optikelement 525 in diesem Ausführungsbeispiel entlang einer optischen Achse der Messbeleuchtungsvorrichtung 500 in axialer Richtung verfahrbar ist. Der so generierte Ringfokuslichtstrahl 530 ist in diesem Ausführungsbeispiel in der Messebene 505 des optischen Prüflings 100 ringförmig fokussierbar. Mit anderen Worten folgt hinter der Strahlformung die Vorsatzoptik, welche den ringförmigen Fokus in der gewünschten Messebene 505 erzeugt. Die Messebene 505 beschreibt dabei den Kreis, auf dessen Umfang die lokalen Krümmungsmittelpunkte der zu messenden, rotationssymmetrischen, asphärischen Linse angeordnet sind.

Lediglich beispielhaft ist der Prüfling 100 in diesem Ausführungsbeispiel ausgebildet, um einen Retroreflex zu erzeugen, wie er in der vorangegangenen Figur 2 beschrieben wurde, da der Ringfokus auf eine Prüflingsfläche abbildbar ist und die Hauptstrahlen entlang der Flächennormalen verlaufen. Der dadurch vom Prüfling 100 reflektierte Strahl 540 ist in diesem Ausführungsbeispiel beim Auftreffen auf den Strahlteiler 520 durch diesen auf eine Detektionseinrichtung 545 ablenkbar. Bei der Detektionseinrichtung 545 handelt es sich lediglich beispielhaft um einen Bildsensor zum Erfassen des von dem Prüfling 100 reflektierten Strahls 540, wobei die Detektionseinrichtung lediglich beispielhaft auf einer Erfassungsebene 550 angeordnet und ausgebildet ist, um den reflektierten Strahl 540 auf dem Bildsensor abzubilden. Hierfür ist der Bildsensor lediglich beispielhaft als CCD Sensor ausgebildet. In einem anderen Ausführungsbeispiel kann die Detektionseinrichtung auch beispielsweise einen CMOS Sensor aufweisen. Zudem ist die Detektionseinrichtung 545 in diesem Ausführungsbeispiel ausgebildet, um ein den reflektierten Strahl 540 repräsentierendes Signal 555 an eine Auswerteeinheit 560 bereitzustellen, die ausgebildet ist, um unter Verwendung des Signals 555 eine Position des Prüflings 100 in Relation zu der optischen Messbeleuchtungsvorrichtung 500 zu berechnen. Die Auswerteeinheit 560 ist ausgebildet, um aus der Intensitätsverteilung auf dem Detektor eine Kenngröße zu berechnen, die mit der lateralen Lage des Prüflings 100 relativ zum Messsystem korreliert. Damit das vom Prüfling 100 reflektierte Licht durch den Bildsensor erfassbar ist, ist in diesem Ausführungsbeispiel die Position des Strahlteilers 520 und der Detektionseinrichtung 545 so gewählt, dass der Ringfokus abbildbar ist. In einem anderen Ausführungsbeispiel kann entweder auch der Ringfokus oder der Bessel-Lichtstrahl abbildbar sein und zusätzlich oder alternativ können auch zwei Strahlteiler verwendet werden, sodass beide Ebenen sichtbar gemacht werden können. Der Grad der Dezentrierung des Prüflings 100 ist durch Rotation, ähnlich wie für sphärische Linsen, sichtbar machbar. Mithilfe einer Zentriermessung in verschiedenen, radialen Abständen zur Rotationsachse des Prüflings 100, ist auf eine mögliche Verkippung der asphärischen Fläche schließbar.

Mit anderen Worten lässt sich die Messbeleuchtungsvorrichtung 500 wie folgt beschreiben. Der Prüfling 100 weist eine Mehrzahl von Krümmungsmittelpunkten auf, die je einer Zone der Linse zuordenbar sind, und auf einem Ring liegen, dessen Mittelpunkt auf der Symmetrieachse liegt. An dem Prüfling 100 ist ein Retroreflex erzeugbar, wenn ein ringförmiger Fokus sich mit diesem Ring deckt. Da die Krümmungsradien sich stark abhängig vom betrachteten Radialabstand ändern, ist eine schmale zonale Beleuchtung im Radialabstand vorteilhaft, um einen guten Retroreflex zu erhalten. Die Erzeugung des Ringfokus ist folglich mit weiteren Randbedingungen verknüpft. So ist für eine an verschiedene Prüflinge anpassbare Messvorrichtung sowohl der Durchmesser des Ringfokus als auch die zugehörigen Winkel der Hauptstrahlen einstellbar. Dies lässt sich dadurch erreichen, dass beispielsweise in der Fourierebene vor der fokussierenden Vorsatzoptik ein Bessel-Fokus oder ein Bessel-artiger Fokus erzeugbar ist. Dabei bestimmen die Strahlwinkel des Bessel-Fokus den Durchmesser des Ringfokus in der Messebene und die relative axiale Lage des Bessel-Fokus die Hauptstrahlwinkel. Dabei ist bei der Erzeugung des Bessel-artigen Fokus eine Ringblende einsetzbar, um das Strahlbündel zu begrenzen. Zur Erzeugung eines Bessel-artigen Fokus sind verschiedene Ansätze möglich. So ist optional die Kombination eines ringförmigen Objektes (Strichplatte, Reticle) in der vorderen Brennebene einer Kollimationslinse verwendbar. Als Variante ist ebenfalls eine leichte Abweichung vom exakten Bessel-Fokus einsetzbar, bei dem die Strahlen innerhalb von Radialschnitten durch das Strahlenbündel nicht parallel sind, sondern leicht konvergent, oder divergent. Dies ist beispielsweise dadurch realisierbar, dass die Beleuchtung nicht kollimiert ist, sondern entsprechend leicht divergent oder konvergent. Eine derartige Fokussierung der Beleuchtung führt zugleich zu einer axialen Verschiebung des dann nur noch näherungsweise Bessel-artigen Fokus. Dies ist nutzbar, um den Strahlengang zur Erzeugung des Ringfokus zu modifizieren. Bezüglich des Detektionsstrahlenganges sind ebenfalls mehrere Varianten möglich. Eine Variante ist, dass der prüflingsseitig durch die Vorsatzoptik erzeugte Ringfokus auf den Detektor abbildbar ist. Je nach Grad der Dezentrierung zwischen Ringfokus und asphärischer Fläche ändert sich die laterale Position auf dem Detektor. Eine weitere Variante besteht darin, dass der Detektor in einer zum Bessel-artigen Fokus konjugierten Ebene anordenbar ist. Auch in diesem Fall besteht ein Zusammenhang zwischen der Position des Fokus auf dem Detektor und dem Grad der Dezentrierung der asphärischen Fläche. Die ringförmige Beleuchtung kann optional durch verschiedene austauschbare Ringblenden oder eine sogenannte Zoomeinheit aus zwei zusätzlichen Axicons variiert werden. Auch die bereits erwähnte Abweichung von kollimierter Beleuchtung kann zu Veränderung des Durchmessers der ringförmigen Beleuchtung führen. Die axiale Lage des Bessel-artigen Fokus kann beispielsweise durch eine axial verschiebbar gestaltete Beleuchtungseinheit oder durch eine axial verschiebbar gestaltete Vorsatzoptik variiert werden. Entsprechend der aus dem Stand der Technik bekannten Zentriermessungen an sphärischen Flächen kann mit oder ohne Rotationsbewegung des Prüflings gemessen werden. Durch Messung der Zentrierung in verschiedenen Radialabständen (Zonen) ist auf die Verkippung der Asphären-Achse zurückschließbar. Dabei kann eine der Messungen der Zentrierung die des paraxialen Bereichs der Asphäre sein. Bezüglich eines Ausführungsbeispiels, in dem ein Ring-Reticle und eine Kollimationslinse zur Erzeugung des Bessel-artigen Fokus eingesetzt werden, kann das Reticle ebenfalls austauschbar angeordnet sein oder eine adaptierbare Strichplatte eingesetzt werden, wie zum Beispiel ein Display. Ein ähnliches adaptierbares Element kann optional auch als oben erwähnte Ringblende eingesetzt werden, indem beispielsweise ein pixeliertes LCD-Element eingesetzt wird, mit dem verschiedene Blenden generiert werden können.

Fig. 6 zeigt eine schematische Darstellung einer Messbeleuchtungsvorrichtung 500 gemäß einem Ausführungsbeispiel. Die hier dargestellte Messbeleuchtungsvorrichtung 500 entspricht oder ähnelt der in der vorangegangenen Figur 5 beschriebenen Messbeleuchtungsvorrichtung. Als Ausgangspunkt dient die Beleuchtungseinrichtung 510. In diesem Ausführungsbeispiel umfasst diese eine näherungsweise kohärente sowie schmalbandige Lichtquelle, die ausgebildet ist, um einen Lichtstrahl 515 an eine Kollimationsoptik der Strahlformungseinrichtung 300 bereitzustellen, bei der es sich lediglich beispielhaft um eine konvexes Linsenelement 605, beziehungsweise eine Kondensorlinse, handelt. In einem anderen Ausführungsbeispiel kann die Kollimationsoptik auch als Objektiv ausgebildet sein. In einem weiteren Ausbildungsbeispiel ist auch eine divergente Beleuchtung mit einer inkohärenten und breitbandigen Lichtquelle möglich. In diesem Ausführungsbeispiel der Messbeleuchtungsvorrichtung 500 ist der von der Beleuchtungseinrichtung 510 bereitgestellte Lichtstrahl 515 mittels der Strahlformungseinrichtung 300 formbar, welche das Strahlenbündel in einer geeigneten Art und Weise zu einem Bessel-ähnlichen Strahl, beziehungsweise dem Bessel-Lichtstrahl 305, umformt. Lediglich beispielhaft umfasst die Strahlformungseinrichtung 300 hierfür eine Strichplatte 610, die auch als Reticle bezeichnet werden kann. Die Strichplatte 610 ist lediglich beispielhaft senkrecht zu einer optischen Achse des Linsenelements 605 angeordnet und austauschbar ausgebildet. Bei kollimierter Beleuchtung des Reticles durch eine Kondensorlinse ist die Änderung der Winkel der konisch kollimierten Strahlenbündel durch eine Änderung des Reticle-Durchmessers *2Rᵣₑₜ* möglich. Der Winkel der konischen Strahlbündel zur optischen Achse ist mathematisch wie folgt beschreibbar: tan(*β*) = *Rᵣₑₜ* / *f.* Dabei beschreibt *f* die Brennweite der Linse hinter dem Ring-Reticle. Der Lichtstrahl 515 ist mit der hier dargestellten Anordnung über einen Strahlteiler 520 und über eine erste Linse 620 auf das Optikelement 525, beziehungsweise die Vorsatzoptik, lenkbar. Die Linse 620 formt dabei den Lichtstrahl 515 zu einem Bessel-Lichtstrahl 305 um. Das Optikelement 525 ist ausgebildet, um den Bessel-Lichtstrahl 305 in den Ringfokuslichtstrahl 530 umzuformen Der ringförmige Fokus wird in der gewünschten Messebene 505 des Prüflings 100 hinter der Vorsatzoptik erzeugt. Der Hauptstrahlwinkel in der Messebene 505 ist durch die relative, axiale Lage des Bessel-Lichtstrahls 305 zum Optikelement 525 bestimmbar und durch axiales Verschieben der entsprechenden Vorsatzoptik beeinflussbar. Dabei ist ein Abstand a zwischen der hinteren Brennebene 625 der ersten Linse 620 und des Optikelements 525 mit der Brennweite *f*₂ veränderbar. Für den Hauptstrahlwinkel *θ* hinter der Vorsatzoptik gilt folgender Zusammenhang: $tan \left(θ\right) = \left({f}_{2}-a\right) / {f}_{2} ⋅ tan \left(β\right) = \left({f}_{2}-a\right) / {f}_{2} ⋅ {R}_{ret} / {f}_{1}$

Für den Radius des Ringfokus gilt der folgende Zusammenhang: ${r}_{f} = {R}_{ret} . {f}_{2} / {f}_{1}$ wobei die Strahlformungseinrichtung 300 eine Strichplatte 610 und ein konvexes Linsenelement umfasst, wobei die Strichplatte 610 innerhalb eines Toleranzbereichs in einer Brennebene des Linsenelements angeordnet ist und/oder senkrecht zu einer optischen Achse des Linsenelements angeordnet ist, insbesondere wobei die Strichplatte (610) austauschbar und/oder veränderbar ist

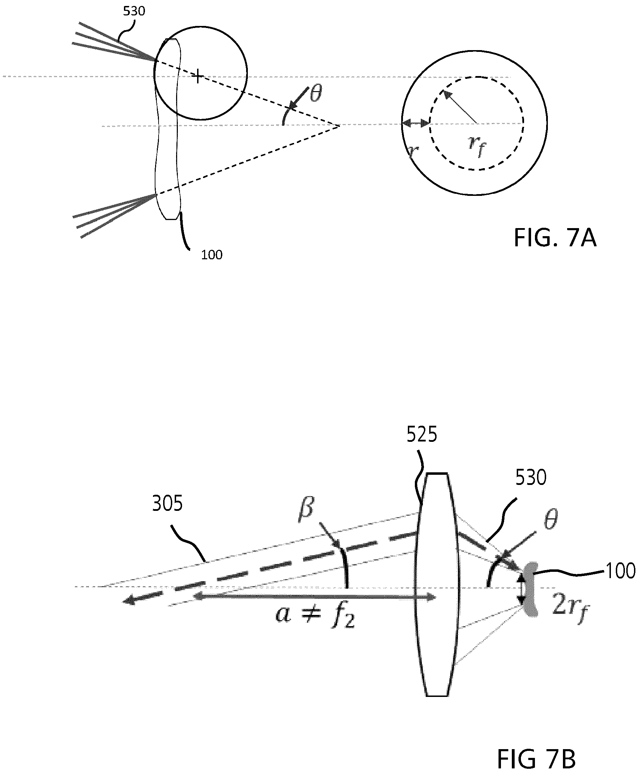

Fig. 7 zeigt eine schematische Darstellung des Zusammenhangs zwischen dem Hauptstrahlwinkel *β* des Bessel-Lichtstrahls 305 und des Durchmessers des Ringfokus *r_{f}.* Dabei zeigt die Teilfigur 7A eine Seitenansicht eines Prüflings 100 und die Teilfigur 7B eine Seitenansicht eines Optikelements 525 mit einem Prüfling 100. Für den Einsatz der in den vorangegangenen Figuren 5 und 6 beschriebenen Messbeleuchtungsvorrichtung ist es erforderlich, dass der Strahlengang an verschiedene Prüflinge, bzw. verschiedene Zonen eines Prüflings 100, anpassbar ist. So ist es erforderlich, den Durchmesser des Ringfokus *r_{f}* sowie die Hauptstrahlwinkel hinter dem Optikelement 525, das auch als Fokussieroptik oder Vorsatzoptik bezeichnet werden kann, zu variieren. Dies ist auf unterschiedliche Art und Weise erreichbar. Der Zusammenhang zwischen dem Hauptstrahlwinkel *β* vor der Vorsatzoptik und dem Hauptstrahlwinkel *θ* hinter der Vorsatzoptik beziehungsweise dem Radius des Ringfokus *r_{f}* ist in den hier abgebildeten Figuren grafisch dargestellt. Wird zur Erzeugung des Bessel-Lichtstrahls 305 die Kombination aus einer Linse mit Ring-Reticle gewählt, so sind, bei einer vorzugsweise leicht divergenten Beleuchtung, durch Variation der Position des Reticles, die Winkel der konisch kollimierten Strahlenbündel des Bessel-Lichtstrahls 305, in Bezug auf die optische Achse, veränderbar. Durch diese Winkeländerung verändert sich auch die Schärfentiefe des Bessel-Lichtstrahls 305 und damit seine axiale Lage in Bezug auf das Optikelement 525, was wiederum die Hauptstrahlwinkel *β*, *θ* beeinflusst. Das Verschieben des Reticles aus dem Brennpunkt der Linse hätte auch zu Folge, dass die konisch kollimierten Strahlenbündel hinter der Linse nicht länger parallel zueinander verlaufen. Durch die Tatsache, dass die konischen Strahlenbündel nicht länger parallel untereinander verlaufen, wäre die Bedingung für einen Bessel-Strahl nur noch teilweise erfüllt, was auf die Entstehung des ringförmigen Zwischenbildes folglich ebenfalls einen Einfluss hätte und bewirkt, dass das scharfe Zwischenbild in einer axial von der Brennebene unterschiedlichen Ebene entsteht, was auch eine Änderung des Durchmessers des Ringfokus (Ringdurchmesser *r*) zur Folge haben kann. Für das Funktionieren der Messbeleuchtungsvorrichtung ist die Entstehung eines hinreichend erkennbaren, ringförmigen Zwischenbildes entscheidend. Abweichungen des Bessel-ähnlichen Strahls von seiner idealen Form sind bis zu einem gewissen Grad zulässig.

Bei kollimierter Beleuchtung des Reticles durch eine Kondensorlinse, wäre die Änderung der Winkel der konisch kollimierten Strahlenbündel durch eine Änderung des Blendendurchmessers möglich. Durch Änderung der Dicke des Rings in der Blende ist der Durchmesser des konischen Strahlenbündels variierbar. Die Anpassungen der Ringblende sind technisch mithilfe eines Reticle-Wechslers realisierbar. Optional ist auch die Erzeugung verschiedener Ringstrukturen über ein Display möglich. Der Hauptstrahlwinkel *θ* in der Messebene ist durch die relative, axiale Lage des Bessel-Lichtstrahls 305 zum Optikelement 525 bestimmbar und durch axiales Verschieben der entsprechenden Vorsatzoptik beeinflussbar. Dabei ist der Abstand a zwischen der hinteren Brennebene der ersten Linse und der Vorsatzoptik mit der Brennweite *f*₂ veränderbar.

Bei der Verwendung eines Axicons zur Erzeugung des Bessel-Lichtstrahls 305 und des ringförmigen Zwischenbildes sind ebenfalls diverse Ansätze zur Strahlformung denkbar. Insbesondere ist hierbei eine nicht vollständig kollimierte Beleuchtung des Axicons zur Änderung des Ringdurchmessers r beziehungsweise des Durchmessers des Ringfokus *r_{f}* möglich. Optional ist auch ein afokales Teleskop im Beleuchtungsstrahlengang zur Strahlaufweitung bei kollimierter Beleuchtung möglich. Denkbar ist auch der Einsatz einer austauschbaren Vorsatzoptik zur Beeinflussung des Ringfokusdurchmessers sowie der Hauptstrahlwinkel. Denkbar ist auch der Einsatz zwei weiterer Axicons als Zoom-Optik. Die Strahlbegrenzung ist mithilfe einer ringförmigen Aperturblende beispielsweise vor dem Axicon realisierbar.

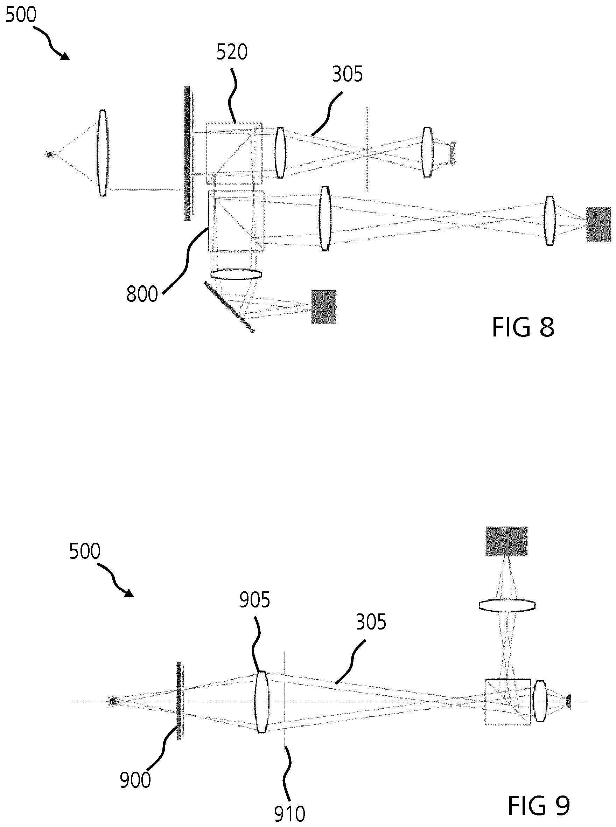

Fig. 8 zeigt eine schematische Darstellung einer Messbeleuchtungsvorrichtung 500 gemäß einem Ausführungsbeispiel. Die hier dargestellte Messbeleuchtungsvorrichtung 500 entspricht oder ähnelt der in den vorangegangenen Figuren 5 und 6 beschriebenen Messbeleuchtungsvorrichtung, mit dem Unterschied, dass im hier dargestellten Ausführungsbeispiel im reflektierten Strahlengang außer dem Strahlteiler 520 noch ein weiterer Strahlteiler 800 angeordnet ist, mit dem Ziel, sowohl eine Abbildung des Ringfokus, als auch eine Abbildung des Bessel-Lichtstrahls 305 zu erzeugen.

Fig. 9 zeigt eine schematische Darstellung einer Messbeleuchtungsvorrichtung 500 gemäß einem Ausführungsbeispiel. Die hier dargestellte Messbeleuchtungsvorrichtung 500 entspricht oder ähnelt der in den vorangegangenen Figuren 5, 6 und 8 beschriebenen Messbeleuchtungsvorrichtung. In diesem Ausführungsbeispiel ist zur Erzeugung des Bessel-Lichtstrahls 305 ein Ring-Reticle 900 in der vorderen Brennebene f einer Kollimationslinse 905 angeordnet. Die Beleuchtung erfolgt in diesem Ausführungsbeispiel divergent und es ist eine zusätzliche, ringförmige Aperturblende 910 zur Strahlbegrenzung im Strahlengang angeordnet. Lediglich beispielhaft ist die zusätzliche Aperturblende austauschbar.

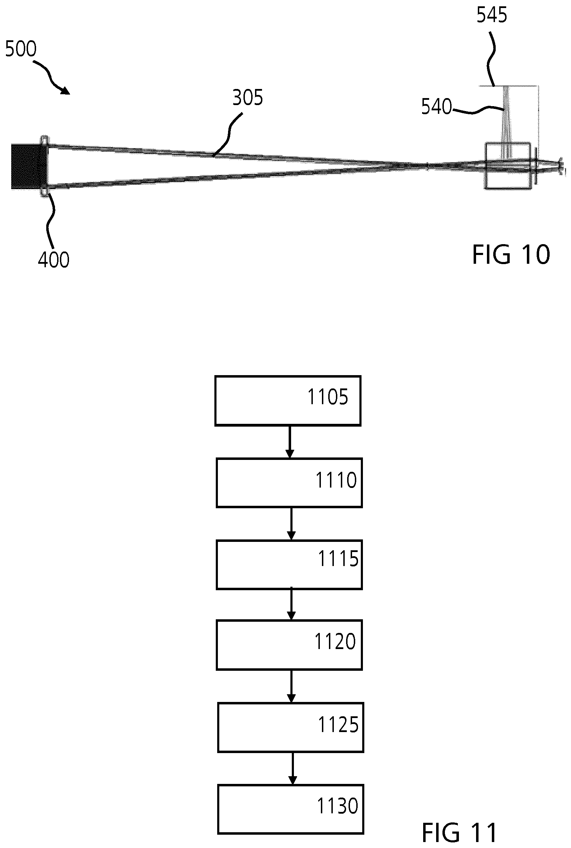

Fig. 10 zeigt eine schematische Darstellung einer Messbeleuchtungsvorrichtung 500 gemäß einem Ausführungsbeispiel. Die hier dargestellte Messbeleuchtungsvorrichtung 500 entspricht oder ähnelt der in den vorangegangenen Figuren 5, 6, 8 und 9 beschriebenen Messbeleuchtungsvorrichtung. In diesem Ausführungsbeispiel ist der Bessel-Lichtstrahl 305 mithilfe eines Axicons 400 erzeugbar. Im Strahlengang des reflektierten Strahls 540 ist eine Abbildung des Bessel-Lichtstrahls 305 erzeugbar, wobei sich der Sensor der Detektionseinrichtung 545 in einer zum Bessel-Lichtstrahl 305 konjugierten Ebene befindet. In einem anderen Ausführungsbeispiel kann der Aufbau um einen weiteren Strahlteiler mit Fokussieroptik erweiterbar, um ebenfalls eine Abbildung des ringförmigen Fokus zu erzeugen.

Fig. 11 zeigt ein Ablaufdiagramm eines Verfahrens 1100 zum Betreiben einer Messbeleuchtungsvorrichtung gemäß einem Ausführungsbeispiel. Das Verfahren 1100 umfasst einen Schritt 1105 des Bereitstellens von zumindest einem Lichtstrahl und einen Schritt 1110 des Umformens des zumindest einen Lichtstrahls zu einem Bessel-Lichtstrahl, wobei eine Form des Bessel-Lichtstrahls innerhalb eines Toleranzbereichs durch die Bessel-Funktion beschreibbar ist. Zudem umfasst das Verfahren 1100 einen Schritt 1115 des Überführens des Bessel-Lichtstrahls in einen Ringfokuslichtstrahl, der in der Messebene des optischen Prüflings und zusätzlich oder alternativ einer Erfassungsebene ringförmig fokussiert oder fokussierbar ist. In diesem Ausführungsbeispiel weist das Verfahren 1100 außerdem Schritt 1120 des Erfassens eines von dem Prüfling reflektierten Strahls und Bereitstellen eines den reflektierten Strahl repräsentierenden Signals auf, sowie einen Schritt 1125 des Berechnens einer Position zumindest eines Krümmungsmittelpunks einer Sphärenzone des Prüflings. Des Weiteren umfasst das Verfahren 1100 lediglich beispielhaft Schritt 1130 des Rotierens des Prüflings, um die Schritte des Verfahrens 1100 nach dem Rotieren erneut auszuführen, wobei eine Rotationsachse des Prüflings innerhalb eines Toleranzbereichs der optischen Achse der Messbeleuchtungsvorrichtung entspricht. Wird der Prüfling relativ zum Messsystem rotiert, oder eine optisch äquivalente Rotationsbewegung erzeugt, dann ist aus den ermittelten Messdaten auf die Zentrierung des Prüflings relativ zur Rotationsachse schließbar. Werden Messungen auf unterschiedlichen Zonen des asphärischen Prüflings durchgeführt, dann ist aus der Kombination der Messdaten sowohl auf die Zentrierung als auch auf die Richtung der Asphärenachse zurückschließbar.

## Patentansprüche

1. Optische Messbeleuchtungsvorrichtung (500) zum Beleuchten eines mit einer rotationssymmetrischen, asphärischen Oberfläche ausgeformten und in einer Messebene (505) angeordneten optischen Prüflings (100), wobei die Messbeleuchtungsvorrichtung (500) folgende Merkmale aufweist:
eine Beleuchtungseinrichtung (510) zum Bereitstellen von zumindest einem Lichtstrahl (515);
eine Strahlformungseinrichtung (300) zum Umformen des zumindest einen Lichtstrahls (515) zu einem Bessel-Lichtstrahl (305), wobei eine Form des Bessel-Lichtstrahls (305) innerhalb eines Toleranzbereichs durch die Bessel-Funktion beschreibbar ist; und
ein Optikelement (525) zum Überführen des Bessel-Lichtstrahls (305) in einen Ringfokuslichtstrahl (530), der in der Messebene (505) des optischen Prüflings (100) und/oder einer Erfassungsebene (550) ringförmig fokussiert
**dadurch gekennzeichnet, dass**
die optische Messbeleuchtungsvorrichtung dazu eingerichtet ist, den Prüfling relativ zur optischen Messbeleuchtungsvorrichtung zu rotieren oder eine optisch äquivalente Rotationsbewegung zu erzeugen
wobei die optische Messbeleuchtungsvorrichtung in der Erfassungsebene (550) eine Detektionseinrichtung (545) umfasst, zum Erfassen eines von dem Prüfling (100) reflektierten Strahls (540), wobei der durch das Optikelement (525) erzeugte Ringfokuslichtstrahl (530) auf der Detektionseinrichtung (545) abgebildet wird und/oder die Detektionseinrichtung (545) in einer zum Bessel-artigen Fokus des Bessel-Lichtstrahls (305) konjugierten Ebene angeordnet ist.

2. Optische Messbeleuchtungsvorrichtung (500) gemäß Anspruch 1, wobei die Strahlformungseinrichtung (300) ein Axicon (400) umfasst.

3. Optische Messbeleuchtungsvorrichtung (500) gemäß einem der vorangegangenen Ansprüche, wobei die Strahlformungseinrichtung (300) eine Strichplatte (610) und ein konvexes Linsenelement (605) umfasst, wobei die Strichplatte (610) innerhalb eines Toleranzbereichs in einer Brennebene des Linsenelements (605) angeordnet ist und/oder senkrecht zu einer optischen Achse des Linsenelements (605) angeordnet ist, insbesondere wobei die Strichplatte (610) austauschbar und/oder veränderbar ist.

4. Optische Messbeleuchtungsvorrichtung (500) gemäß einem der vorangegangenen Ansprüche, wobei die Strahlformungseinrichtung (300) ausgebildet ist, um den Bessel-Lichtstrahl (305) in Form einer Mehrzahl von im Wesentlichen konzentrischen Ringen bereitzustellen.

5. Optische Messbeleuchtungsvorrichtung (500) gemäß einem der vorangegangenen Ansprüche, wobei die Beleuchtungseinrichtung (510) eine zumindest teilweise ringförmig ausgeformte Aperturblende (315, 910) umfasst, insbesondere wobei die Aperturblende (315, 910) austauschbar und/oder veränderbar ist.

6. Optische Messbeleuchtungsvorrichtung (500) gemäß einem der vorangegangenen Ansprüche, wobei die Beleuchtungseinrichtung (510) eine kohärente Lichtquelle umfasst und/oder ausgebildet ist, um den Lichtstrahl (515) kollimiert bereitzustellen, und/oder zumindest ein Display aufweist.

7. Optische Messbeleuchtungsvorrichtung (500) gemäß einem der vorangegangenen Ansprüche, wobei die Detektionseinrichtung (545) ausgebildet ist, um ein den reflektierten Strahl (540) repräsentierendes Signal (555) bereitzustellen.

8. Optische Messbeleuchtungsvorrichtung (500) gemäß Anspruch 7, wobei die Detektionseinrichtung (545) mindestens einen Bildsensor umfasst, wobei der reflektierte Strahl (540) auf dem Bildsensor abbildbar ist.

9. Optische Messbeleuchtungsvorrichtung (500) gemäß einem der vorangegangenen Ansprüche, mit einem Strahlteiler (520), der ausgebildet ist, um den Bessel-Lichtstrahl (305) passieren zu lassen und den reflektierten Strahl (540) abzulenken.

10. Optische Messbeleuchtungsvorrichtung (500) gemäß einem der vorangegangenen Ansprüche 7 bis 9, mit einer Auswerteeinheit (560), die ausgebildet ist, um unter Verwendung des Signals (555) eine Position des Prüflings (100) in Relation zu der optischen Messbeleuchtungsvorrichtung (500) zu berechnen.

11. Verfahren (1100) zum Betreiben einer Messbeleuchtungsvorrichtung (500) gemäß einem der vorangegangenen Ansprüche, wobei das Verfahren (1100) folgende Schritte (1105, 1110, 1115) umfasst:
Bereitstellen (1105) von zumindest einem Lichtstrahl (515);
Umformen (1110) des zumindest einen Lichtstrahls (515) zu einem Bessel-Lichtstrahl (305), wobei eine Form des Bessel-Lichtstrahls (305) innerhalb eines Toleranzbereichs durch die Bessel-Funktion beschreibbar ist; und
Überführen (1115) des Bessel-Lichtstrahls (305) in einen Ringfokuslichtstrahl (530), der in der Messebene (505) des optischen Prüflings (100) und/oder einer Erfassungsebene (550) ringförmig fokussiert oder fokussierbar ist, sodass aus der Lage des Ringfokuslichtstrahls (530) innerhalb der Messebene (505) und/oder der Erfassungsebene (550) ein Rückschluss auf den Grad an Dezentrierung des optischen Prüflings (100) ziehbar ist;
mit einem Schritt (1130) des Rotierens des Prüflings (100), um die Schritte des Bereitstellens (1105), Umformens (1110) und Überführens (1115) nach dem Rotieren erneut auszuführen, wobei im Schritt (1130) des Rotierens der Prüfling (100) um eine Rotationsachse des Prüflings (100) rotiert wird, die innerhalb eines Toleranzbereichs der optischen Achse der Messbeleuchtungsvorrichtung (500) entspricht.

12. Verfahren (1100) gemäß Anspruch 11, mit einem Schritt (1120) des Erfassens eines von dem Prüfling (100) reflektierten Strahls (540) und Bereitstellen eines den reflektierten Strahl (540) repräsentierenden Signals.

13. Verfahren (1100) gemäß einem der Ansprüche 11 oder 12, mit einem Schritt (1125) des Berechnens einer Position zumindest eines Krümmungsmittelpunkts (105, 110) einer Sphärenzone des Prüflings (100).

14. Computerprogramm, das dazu eingerichtet ist, die optische Messbeleuchtungsvorrichtung (500) nach Anspruch 1 zu veranlassen, die Schritte des Verfahrens (1100) gemäß einem der vorangegangenen Ansprüche 11-13 auszuführen.

## Claims

1. Optical illumination-based measuring device (500) for illuminating an optical sample (100) formed with a rotationally symmetrical, aspherical surface and arranged in a measuring plane (505), the illumination-based measuring device (500) having the following features:
an illumination apparatus (510) for providing at least one light beam (515);
a beam shaping apparatus (300) for transforming the at least one light beam (515) into a Bessel light beam (305), with it being possible for a shape of the Bessel light beam (305) within a tolerance range to be described by the Bessel function; and
an optical element (525) for converting the Bessel light beam (305) into a ring focus light beam (530) which focuses in a ring shape in the measuring plane (505) of the optical sample (100) and/or a detection plane (550), **characterized in that** the optical illumination-based measuring device is designed to rotate the sample relative to the optical illumination-based measuring device or to generate an optically equivalent rotational movement,
the optical illumination-based measuring device, in the detection plane (550), comprising a detection apparatus (545) for detecting a beam (540) reflected from the sample (100) wherein the ring focus light beam (530) generated by the optical element (525) being imaged onto the detection apparatus (545) and/or the detection apparatus (545) being arranged in a plane conjugated to the Bessel-like focus of the Bessel light beam (305).

2. Optical illumination-based measuring device (500) according to claim 1, wherein the beam shaping apparatus (300) comprises an axicon (400).

3. Optical illumination-based measuring device (500) according to either of the preceding claims, wherein the beam shaping apparatus (300) comprises a reticle (610) and a convex lens element (605), wherein the reticle (610) is arranged within a tolerance range in a focal plane of the lens element (605) and/or is arranged perpendicularly to an optical axis of the lens element (605), in particular wherein the reticle (610) is interchangeable and/or modifiable.

4. Optical illumination-based measuring device (500) according to any of the preceding claims, wherein the beam shaping apparatus (300) is designed to provide the Bessel light beam (305) in the form of a plurality of substantially concentric rings.

5. Optical illumination-based measuring device (500) according to any of the preceding claims, wherein the illumination apparatus (510) comprises an aperture diaphragm (315, 910) which is at least partially ring-shaped, in particular wherein the aperture diaphragm (315, 910) is interchangeable and/or modifiable.

6. Optical illumination-based measuring device (500) according to any of the preceding claims, wherein the illumination apparatus (510) comprises a coherent light source and/or is designed to provide the light beam (515) in a collimated manner, and/or has at least one display.

7. Optical illumination-based measuring device (500) according to any of the preceding claims, wherein the detection apparatus (545) is designed to provide a signal (555) which represents the reflected beam (540).

8. Optical illumination-based measuring device (500) according to claim 7, wherein the detection apparatus (545) comprises at least one image sensor, wherein the reflected beam (540) can be imaged on the image sensor.

9. Optical illumination-based measuring device (500) according to any of the preceding claims, comprising a beam splitter (520) which is designed to allow the Bessel light beam (305) to pass through and to deflect the reflected beam (540).

10. Optical illumination-based measuring device (500) according to any of the preceding claims 7 to 9, comprising an evaluation unit (560) which is designed to calculate a position of the sample (100) in relation to the optical illumination-based measuring device (500) using the signal (555).

11. Method (1100) for operating an illumination-based measuring device (500) according to any of the preceding claims, wherein the method (1100) comprises the following steps (1105, 1110, 1115):
providing (1105) at least one light beam (515);
transforming (1110) the at least one light beam (515) into a Bessel light beam (305), wherein a shape of the Bessel light beam (305) within a tolerance range can be described by the Bessel function; and
converting (1115) the Bessel light beam (305) into a ring focus light beam (530) which is focused or can be focused in a ring shape in the measuring plane (505) of the optical sample (100) and/or a detection plane (550) so that the degree of decentering of the optical sample (100) can be inferred from the position of the ring focus light beam (530) within the measuring plane (505) and/or the detection plane (550);
comprising a step (1130) of rotating the sample (100) in order to repeat the steps of providing (1105), transforming (1110) and converting (1115) after rotation, wherein, in the rotating step (1130), the sample (100) is rotated about a rotation axis of the sample (100) which corresponds, within a tolerance range, to the optical axis of the illumination-based measuring device (500).

12. Method (1100) according to claim 11, comprising a step (1120) of detecting a beam (540) reflected by the sample (100) and providing a signal which represents the reflected beam (540).

13. Method (1100) according to either of claims 11 or 12, comprising a step (1125) of calculating a position of at least one center of curvature (105, 110) of a spherical zone of the sample (100).

14. Computer program which is configured to cause the optical illumination-based measuring device (500) according to claim 1 to perform the steps of the method (1100) according to any of the preceding claims 11 - 13.

## Revendications

1. Dispositif d'éclairage de mesure (500) optique destiné à éclairer un échantillon (100) optique façonné avec une surface asphérique à symétrie de rotation et agencé dans un plan de mesure (505), dans lequel le dispositif d'éclairage de mesure (500) présente les caractéristiques suivantes :
un appareil d'éclairage (510) destiné à fournir au moins un rayon lumineux (515) ;
un appareil de mise en forme de rayon (300) destiné à transformer l'au moins un rayon lumineux (515) en un rayon lumineux de Bessel (305), dans lequel une forme du rayon lumineux de Bessel (305) peut être décrite, au sein d'une plage de tolérance, par la fonction de Bessel ; et
un élément optique (525) destiné à convertir le rayon lumineux de Bessel (305) en un rayon lumineux à foyer annulaire (530) qui focalise de manière annulaire dans le plan de mesure (505) de l'échantillon (100) optique et/ou dans un plan d'acquisition (550) ; **caractérisé en ce que** le dispositif d'éclairage de mesure optique est conçu pour faire tourner l'échantillon par rapport au dispositif d'éclairage de mesure optique ou pour générer un mouvement de rotation optiquement équivalent,
dans lequel le dispositif d'éclairage de mesure optique comprend, dans le plan d'acquisition (550), un appareil de détection (545) destiné à acquérir un rayon (540) réfléchi par l'échantillon (100), dans lequel le rayon lumineux à foyer annulaire (530) généré par l'élément optique (525) est projeté sur l'appareil de détection (545) et/ou l'appareil de détection (545) est agencé dans un plan conjugué au foyer de type Bessel du rayon lumineux de Bessel (305).

2. Dispositif d'éclairage de mesure (500) optique selon la revendication 1, dans lequel l'appareil de mise en forme de rayon (300) comprend un axicon (400).

3. Dispositif d'éclairage de mesure (500) optique selon l'une des revendications précédentes, dans lequel l'appareil de mise en forme de rayon (300) comprend un réticule (610) et un élément de lentille (605) convexe, dans lequel le réticule (610) est agencé, au sein d'une plage de tolérance, dans un plan focal de l'élément de lentille (605) et/ou est agencé perpendiculairement à un axe optique de l'élément de lentille (605), dans lequel le réticule (610) est en particulier interchangeable et/ou modifiable.

4. Dispositif d'éclairage de mesure (500) optique selon l'une des revendications précédentes, dans lequel l'appareil de mise en forme de rayon (300) est formé pour fournir le rayon lumineux de Bessel (305) sous la forme d'une pluralité d'anneaux sensiblement concentriques.

5. Dispositif d'éclairage de mesure (500) optique selon l'une des revendications précédentes, dans lequel l'appareil d'éclairage (510) comprend un diaphragme d'ouverture (315, 910) façonné au moins partiellement de manière annulaire, en particulier dans lequel le diaphragme d'ouverture (315, 910) est interchangeable et/ou modifiable.

6. Dispositif d'éclairage de mesure (500) optique selon l'une des revendications précédentes, dans lequel l'appareil d'éclairage (510) comprend une source de lumière cohérente et/ou est formé pour fournir le rayon lumineux (515) sous forme collimatée et/ou présente au moins un affichage.

7. Dispositif d'éclairage de mesure (500) optique selon l'une des revendications précédentes, dans lequel l'appareil de détection (545) est formé pour fournir un signal (555) représentant le rayon (540) réfléchi.

8. Dispositif d'éclairage de mesure (500) optique selon la revendication 7, dans lequel l'appareil de détection (545) comprend au moins un capteur d'image, dans lequel le rayon (540) réfléchi peut être projeté sur le capteur d'image.

9. Dispositif d'éclairage de mesure (500) optique selon l'une des revendications précédentes, comportant un séparateur de rayon (520), qui est formé pour laisser passer le rayon lumineux de Bessel (305) et pour dévier le rayon (540) réfléchi.

10. Dispositif d'éclairage de mesure (500) optique selon l'une des revendications 7 à 9 précédentes, comportant une unité d'évaluation (560) qui est formée pour calculer, à l'aide du signal (555), une position de l'échantillon (100) par rapport au dispositif d'éclairage de mesure optique (500).

11. Procédé (1100) destiné à faire fonctionner un dispositif d'éclairage de mesure (500) selon l'une des revendications précédentes, dans lequel le procédé (1100) comprend les étapes suivantes (1105, 1110, 1115) :
fourniture (1105) d'au moins un rayon lumineux (515) ;
transformation (1110) de l'au moins un rayon lumineux (515) en un rayon lumineux de Bessel (305), dans lequel une forme du rayon lumineux de Bessel (305) peut être décrite, au sein d'une plage de tolérance, par la fonction de Bessel ; et
conversion (1115) du rayon lumineux de Bessel (305) en un rayon lumineux à foyer annulaire (530), qui est focalisé ou peut être focalisé de manière annulaire dans le plan de mesure (505) de l'échantillon (100) optique et/ou dans un plan d'acquisition (550), de telle sorte que la posture du rayon lumineux à foyer annulaire (530) au sein du plan de mesure (505) et/ou du plan d'acquisition (550) permet de déduire le degré de décentrage de l'échantillon (100) optique ;
comportant une étape (1130) consistant à faire tourner l'échantillon (100) afin de réexécuter les étapes de fourniture (1105), de transformation (1110) et de conversion (1115) après la rotation, dans lequel, dans l'étape (1130) de rotation, l'échantillon (100) est mis en rotation autour d'un axe de rotation de l'échantillon (100) qui correspond au sein d'une plage de tolérance à l'axe optique du dispositif d'éclairage de mesure (500).

12. Procédé (1100) selon la revendication 11, comportant une étape (1120) consistant à acquérir un rayon (540) réfléchi par l'échantillon (100) et à fournir un signal représentant le rayon (540) réfléchi.

13. Procédé (1100) selon l'une des revendications 11 ou 12, comportant une étape (1125) consistant à calculer une position d'au moins un centre de courbure (105, 110) d'une zone sphérique de l'échantillon (100).

14. Programme informatique conçu pour amener le dispositif d'éclairage de mesure (500) optique selon la revendication 1 à exécuter les étapes du procédé (1100) conformément à l'une des revendications 11 à 13 précédentes.
